# EUROPEAN PATENT APPLICATION

(11) **EP 4 817 968 A1**
(43) Date of publication of application: **07.10.2026**
(21) Application number: 26168535.8
(22) Date of filing: 27.03.2026
(51) Int. Cl.: B60R 25/25, B60R 25/24, B60R 25/20, G07C 9/00

(54) **A METHOD AND A DEVICE FOR GENERATING ALERT NOTIFICATION**

(30) Priority: 30.03.2025 IN 202541031287
(71) Applicant: TVS Motor Company Limited, 600006 Chennai (IN)
(72) Inventor: Naresh, Adepu, 600006 Chennai (IN); Narra, Anitha, 600006 Chennai (IN); Rajan, Sippy, 600006 Chennai (IN); Jinu, P Raj, 600006 Chennai (IN); Gollapalli, Chandra Kiran, 600006 Chennai (IN); Parag, Ashok Inamdar, 600006 Chennai (IN)
(74) Representative: Patentanwaltskanzlei Matschnig & Forsthuber OG

(57) **Abstract**

The present invention relates to a system and method for authenticating a user through multiple identification attempts before triggering an alert notification. The system comprises a user data acquisition module configured to receive user data, including biometric, device-based, and behavioral identifiers. A feature extraction module processes the received data to extract unique features such as fingerprint patterns, facial features, passwords, and behavioral patterns. A comparison module verifies the extracted features against pre-stored valid user data. If authentication fails, an authentication control module allows the user to attempt re-authentication up to a predetermined number of times. Upon exceeding the allowed number of failed attempts, an alert module triggers a notification, which may include a visual, auditory, or remote alert. The invention enhances security by minimizing false alarms while ensuring unauthorized access attempts are appropriately flagged.

## Description

### TECHNICAL FIELD

The claimed subject matter in general relates to vehicle security systems. The claimed subject matter also relates in general to automotive electronics, IoT based security solutions, and intelligent access control systems for vehicles. The claimed subject matter in particular relates to alert systems for unauthorized access detection.

### BACKGROUND

Vehicle security and user access control systems are crucial for ensuring the safety and protection of vehicles while providing a personalized experience for users. Modern vehicles increasingly incorporate advanced technologies for user identification, such as biometric scans, RFID tags, and PIN-based authentication, to provide secure access. However, despite these advancements, a significant issue remains regarding the handling of multiple failed authentication attempts before triggering an alert.

Conventional vehicle access systems often implement a single authentication attempt per access request, leading to immediate alerts upon a single failed attempt. This approach may result in unnecessary alerts due to accidental input errors, environmental factors affecting biometric recognition, or temporary technical issues. Consequently, false alarms can desensitize users and security personnel, reducing the overall effectiveness of the security system.

Some existing vehicle access systems either allow unlimited authentication attempts without escalation or restrict access after a single failure without providing an adaptive mechanism for re-authentication. In cases where a legitimate user fails authentication due to momentary issues-such as improper fingerprint placement or voice recognition errors, they may be locked out unnecessarily, leading to inconvenience and requiring manual intervention.

Another problem with conventional access control systems is their inability to provide a structured approach to multiple authentication attempts. If access is denied immediately after one or two failed attempts, it can inconvenience legitimate users who might have simply entered incorrect credentials. On the other hand, allowing unlimited attempts without proper monitoring can expose the vehicle to security risks, as unauthorized individuals may continue trying different authentication methods without triggering any security response.

In fleet management, shared mobility services, and rental vehicle operations, managing failed authentication attempts is even more critical. If multiple unauthorized access attempts go undetected or are not addressed in a timely manner, vehicle misuse or theft may occur. Conversely, excessive false alarms can create inefficiencies in fleet operations and security monitoring.

Currently, there is no efficient system that dynamically manages multiple authentication attempts before triggering an alert. Existing solutions either trigger immediate alarms or fail to provide a systematic approach to determining when a security notification should be sent.

Therefore, there is a need for a vehicle access authentication system that allows a predetermined number of authentication attempts before triggering an alert, ensuring that legitimate users have an opportunity to authenticate successfully while preventing unauthorized access attempts from going unnoticed. Such a system should balance security and user convenience by intelligently managing authentication failures before escalating to an alert mechanism.

### SUMMARY OF THE INVENTION

The claimed subject matter is defined in the independent claims. Further details are defined in the dependent claims.

The claimed subject matter discloses a method for managing multiple authentication attempts for vehicle access before triggering an alert. The method comprises receiving user data, the user data comprising at least one of fingerprint data, a facial image, an identification from a communication device, an identification from a key fob, the presence of a paired communication device, a touch pattern, a behavioral pattern, and a voice command. The method further comprises extracting unique features from the user data, the unique features comprising a fingerprint pattern, facial features, a password from the communication device, a password from the key fob, an identification from the paired communication device, a touch pattern, a behavioral pattern, and a voice pattern.

The method comprises comparing one or more unique features with pre-stored user data, the pre-stored user data comprising at least one of valid fingerprint data, a valid facial image, a valid identification of a communication device, a valid identification from a key fob, a valid identification of the paired communication device in the proximity, a valid behavioral pattern, a valid touch pattern, and a valid voice command. The method further comprises, when the comparison fails, allowing the user to attempt re-authentication up to a predetermined number of times. If the number of failed attempts exceeds the predetermined threshold, an alert notification is generated. The alert notification may include at least one of a visual alert, an auditory alert, or a remote alert.

The access control device comprises a processor and a memory coupled to the processor. The processor is configured to receive user data, compare the user data with pre-stored user data, allow multiple authentication attempts, and generate an alert notification only when the predetermined number of failed attempts is exceeded.

In an advanced embodiment, the system can incorporate an adaptive authentication mechanism that adjusts the number of authentication attempts based on user behavior. For instance, if the system detects that a recognized user frequently fails authentication due to environmental factors (e.g., wet hands affecting fingerprint scanning or low lighting affecting facial recognition), it can dynamically increase the number of allowed attempts before triggering an alert. Conversely, if the failed attempts originate from an unrecognized pattern (e.g., different biometrics, unusual access times), the system can reduce the threshold and trigger an alert more quickly.

The system can be configured to modify authentication attempt thresholds based on the vehicle's location. For example, if the vehicle is parked in a high-security area such as the owner's home, the system may allow more authentication attempts before triggering an alert. Conversely, if the vehicle is parked in a public or high-risk area, such as a shopping mall or an unfamiliar location, the system may reduce the number of allowed failed attempts to enhance security.

To further enhance security, an embodiment of the system can be integrated with the vehicle's immobilizer. If the authentication attempts exceed the predefined threshold, in addition to triggering an alert, the system can disable vehicle functions such as ignition, gear shifting, or throttle response. This ensures that unauthorized individuals cannot operate the vehicle even if they continue to attempt access.

Different vehicle types and usage scenarios may require varying levels of authentication security. In a personal vehicle the system may allow more authentication attempts before an alert is triggered, ensuring convenience for the primary user. In shared or fleet vehicle the system can impose stricter authentication rules, allowing fewer failed attempts before alerting the fleet manager or owner. In rental or leased vehicles the system can integrate with a remote management platform, where failed authentication attempts notify the rental agency and allow remote disabling of the vehicle if necessary.

In certain embodiments, instead of an immediate audible or visual alert, the system can enter a silent monitoring mode where it logs the failed attempts and sends an alert only to the registered owner or fleet manager. This feature can be useful in scenarios where an unauthorized person is repeatedly trying to access the vehicle, but the owner wants to track the activity discreetly before taking further action.

To prevent inconvenience to legitimate users, an emergency override feature can be included. If a registered user repeatedly fails authentication due to unforeseen circumstances (e.g., injury preventing fingerprint recognition), they may be provided with an alternative authentication mechanism, such as answering security questions through a mobile app or using a secondary trusted device for verification.

The system can be integrated with cloud-based security platforms that maintain access logs and analytics. This would allow vehicle owners, fleet managers, or security teams to review historical authentication attempts, identify patterns of unauthorized access attempts, and take preventive measures such as modifying authentication thresholds or blocking certain access methods for added security.

In a high-security embodiment, if repeated failed authentication attempts exceed the threshold, the system can notify pre-registered emergency contacts or local law enforcement authorities. This can be useful in theft-prone areas, ensuring a rapid response to potential vehicle break-ins.

An additional embodiment can include two-factor authentication (2FA) for enhanced security. If repeated authentication failures occur, the system can prompt the user to authenticate via a secondary method, such as entering a one-time password (OTP) sent to a registered mobile device or email before allowing further attempts.

Instead of triggering an alert immediately, the system can impose a temporary lockout period after exceeding the allowed number of failed attempts. During this period, no further authentication attempts will be processed. This discourages brute-force attacks and gives the legitimate owner time to intervene before a security breach occurs.

The features discussed herein and advantages of the claimed subject matter will be better understood with reference to the detailed description, drawings, and claims. This summary is provided to introduce the claimed subject matter in a simplified form. This summary is not intended to identify key features or essential features of the claimed subject matter, nor is it intended to be used to limit the scope of the claimed subject matter.

### BRIEF DESCRIPTION OF THE DRAWINGS

The detailed description is described with reference to the accompanying figures. In the figures, similar reference numerals are used throughout the drawings to reference like features and components.
Figure 1 illustrates a system for generating alert notifications for a failed access according to one embodiment of the present disclosure.
Figure 2 illustrates a method for generating alert notifications for a failed access according to one embodiment of the present disclosure.

### DETAILED DESCRIPTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may indicate any kind of motor vehicle, for example, a two wheeled vehicle, a three wheeled vehicle, car or any other multi-wheeled vehicle. The term 'coupled' is used to indicate coupling between different elements, it may mean directly coupled or indirectly coupled through additional elements. The terms 'module' and 'component' may be used interchangeably. The 'identification' of a communication device may refer to a password of the communication device. The communication device may refer to a mobile phone or any other communication device.

Only the details/components required to describe the claimed subject matter in specific, are disclosed in this document. The details/components which are commonly known or understood by people skilled in the art may not be covered in this document.

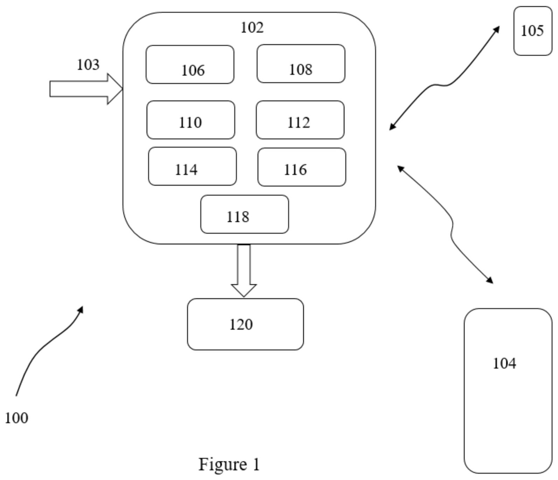

Figure 1 discloses a system for generating alert notifications for multiple failed access attempts. The system 100 comprises an access control device 102, a communication device 104 and a key fob 105. The communication device 104 may be a mobile phone or any wireless communication device. The access control device 102 is referred as device 102 henceforth.

The device 102 comprises a processor 106, a memory 108 coupled to the processor, interfaces 114, pre-stored user data 116 stored in the memory 106. In an embodiment the device 102 comprises a communication unit 110, a voice authentication unit 112, a touch sensor 115, a finger print sensor 117 and a camera 119. In an embodiment the communication unit 110, the voice authentication unit 112, the touch sensor 115, the finger print sensor 117, the camera 119 may be external to the device 102. They are connectable to the device 102 through interfaces 114. The finger print sensor 117, the camera 119 may be fixed near the instrumentation cluster of a two wheeled vehicle or on door or the door frame of any other vehicle. The communication unit 110 handles transmission and reception of data from and to the communication device 104.

The processor 112 is configured to receive user data 103, compare it with pre-stored user data 116, allow multiple authentication attempts, and trigger an alert notification only when the predetermined number of failed attempts is exceeded.

The system integrates various user identification methods, including biometric authentication such as fingerprint scanning, facial recognition, and voice recognition, device-based authentication via a communication device 104 or key fob 105, and behavioral authentication including touch patterns and behavioral patterns. These multiple authentication mechanisms provide flexibility and robustness in access control. The system receives user identification data from a communication device 104, key fob 105, or biometric scanner. This data may include fingerprint data, a facial image, a password, the presence of a paired device, a touch pattern, a behavioral pattern, or a voice command. The system then extracts unique features from the received user data 103. The extracted features may include fingerprint patterns, facial features, authentication credentials from a device or key fob, and behavioral traits.

In an embodiment, when a user tries to unlock the vehicle, using a key fob 105, a mobile phone 104, a finger print scan, a voice command or any other unlocking mechanism, the device 102 captures various user data 103 through the interfaces 114 and/or the communication unit 110. The user data 103 comprises different types of data like, finger print data, facial image, voice command, interaction patterns such as touch pattern or unlocking behaviour, door unlock patterns, detection of a paired mobile phone 104 or a key fob 105 within proximity, password from a mobile phone, password from a key fob 105 etc. The touch sensor 115 may be placed in the instrumentation cluster in a two wheeled vehicle or on the door handle of other vehicles, to capture the touch pattern/unlock pattern. Behavioural pattern may comprise data regarding how the door handle was touched, how the door handle was pulled, how the door handle was pressed, how the instrumentation cluster was touched, how the finger was placed on the finger print sensor 117etc. The behavioural pattern data is obtained from the finger print sensor 117 and the touch sensor 115.

Once the user data 103 is captured by the device 102, the user data 103 is analyzed to extract unique features. The unique features may comprise finger print pattern, facial features, password from the mobile phone 104, password from the key fob 105, detection of paired mobile device 104, touch pattern, behavioral pattern, voice pattern etc. Pattern recognition, biometric analysis, machine learning models may be used to analyze the user data and to enhance the accuracy of unique features.

Once the unique features are extracted, the system compares them with pre-stored user data 116. The pre-stored user data 116 includes valid fingerprints, facial images, device identifiers, behavioral patterns, and voice commands that are authorized for access. If the extracted features match the pre-stored data 116, access is granted. If the extracted features do not match, the system allows the user to retry authentication up to a predetermined number of times. If the user successfully authenticates within the allowed attempts, access is granted, and no alert is triggered. However, if the user exceeds the maximum allowed failed attempts, an alert notification is generated.

The alert, triggered upon exceeding the allowed failed authentication attempts, may include a visual alert 120 such as flashing lights or dashboard notifications, an auditory alert 122 such as a warning sound or security alarm, or a remote alert 124 that notifies the owner via a mobile app or sends a security notification to fleet management or a monitoring system.

In an embodiment, unique features extracted from a single type of user data, for example, finger print pattern, voice pattern, touch pattern etc. may be used for comparison with pre-stored user data. In an embodiment, for robust access control, unique features from at least two types of user data may be used for comparison. For example, using facial features along with a password of the mobile phone, or using finger print pattern with a voice pattern, will increase the accuracy of detecting an authorized user. By incorporating combination of biometric verification and behavioral authentication or voice authentication, the system minimizes false alerts caused by accidental or unauthorized key fob use, reducing unnecessary disturbances for users.

The pre-stored user data may comprise data of multiple users who are authorized to access the vehicle. Once the unique features from the user data are compared with the pre-stored user data and a match is found, the device 102 unlocks the vehicle. If two types of data are used for comparison, both types should match to unlock the vehicle using the interfaces 114 which are connected to electro-mechanical elements like a solenoid, a lever, cables etc.

If the comparison fails, i.e. the unique feature from the user data 103 is compared with the pre-stored user data and no match is found, the attempt to access the vehicle is considered as an un-authorized attempt or a failed attempt. The device 102 generates alert to the owner of the vehicle. The alerts can be visual alerts, auditory alerts and remote alerts.

The visual alerts comprise dashboard indicators and a flashing lamp. The auditory alerts are audio output for a horn and a siren. These auditory alerts deter the unauthorized person from further activities to access the vehicle. The remote alerts comprise a notification to be sent to the owner's mobile phone 104, an SMS to be sent to the owner's mobile phone 104, an Email to be sent to the registered Email account of the owner and a notification to be sent to the owner's account in a cloud-based server.

In an embodiment the system can be dynamically adjusted for its security response based on the severity of the authentication failure, e.g., a smaller predetermined number of failed attempts may trigger a local notification like dashboard indicator or flashing lights, while larger predetermined number of multiple failed attempts may activate siren and remote alert escalation. Flashing lights may be fitted near the door handles.

In an embodiment the device 102 is connected to an instrumentation cluster unit 120. The dashboard indicators and a flashing lamp are part of the instrumentation cluster 120. The device 102 sends signals to instrumentation cluster 120 activate dashboard indicators and a flashing lamp. In an embodiment the flashing lamp could be on the exterior of the vehicle and may be controlled by the device 102 through interfaces 114. In an embodiment the device 102 and the instrumentation cluster unit 120 are combined and implemented as one unit. In an embodiment the instrumentation cluster unit 120 itself has functionalities of the device 102.

The device 102 comprises interfaces 114 to receive user data 103. The interfaces 114 may also comprise wiring harness connected to various sensors and other control units in the vehicle, for example, instrumentation cluster unit 120. The interfaces 114 may comprise input ports to receive data from voice authentication unit 112, finger print sensor 117, touch sensor 115, camera 119 etc. The interfaces 114 comprises output ports to output various signals, for example, flashing lights, horn output, output for a siren etc.

There may be different modules to perform different functionalities, for example, a receiving module to receive user data 103, a transmitting module to transmit remote alerts, and output module to output notifications at the vehicle. There may be module to send different notifications to different interfaces. These may be implemented as individual modules. In an embodiment, one or more of these modules may be combined. These modules may be implemented in hardware, firmware or a combination.

The processor 106 may comprise one or more of a central processing unit (CPU), a digital signal processor (DSP), an application specific integrated circuit (ASIC), a controller, a field programmable gate array (FPGA), or any other hardware device, a firmware device, or any combination of these. The processor 106 is configured using control registers, input output ports, firmware, interfaces 114 etc. to perform the operations described herein.

In an embodiment, the memory 108 comprises one or more volatile and non-volatile memory components which are capable of storing data and instructions to be executed.

The pre-stored user data comprises a valid finger print data, a valid identification of a mobile phone 104, a valid identification of a key fob 105, a valid facial image, a valid behavioral pattern of access and a valid voice command. These data are stored during storing phase of the device 102. The device 102 may be put into storing mode through a settings menu and all these data may be captured by the device 102 and pre-stored. The pre-stored user data 116 may be stored for multiple users who are authorized. The valid identification of a mobile phone and a valid identification of a key fob 105 may be their passwords.

Fingerprint scanning, analysis and voice command analysis for authentication are known concepts and hence not described.

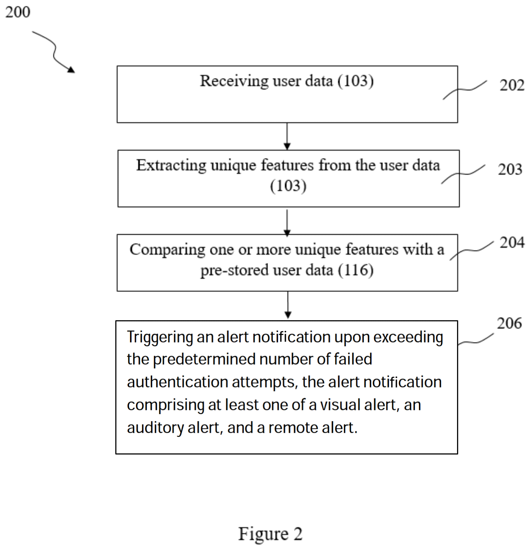

Figure 2 discloses a method 200 for generating alert notifications for a failed access. Step 202 comprises receiving user data 103. The user data 103 comprises different types of data like, fingerprint data, facial image, voice command, interaction patterns such as touch pattern or unlocking behaviour, door unlock patterns, detection of a paired mobile phone 104 or a key fob 105 within proximity, password from a mobile phone, password from a key fob 105 etc.

Step 203 comprises extracting unique features from the user data 103. The unique features may comprise fingerprint pattern, facial features, password from the mobile phone 104, password from the key fob 105, detection of paired mobile device 104, touch pattern, behavioral pattern, voice pattern etc.

Step 204 comprises comparing the unique features with a pre-stored user data 116. The pre-stored user data 116 comprises at least one of a valid fingerprint data, a valid identification from a mobile phone 104, a valid identification from a paired mobile phone 104, a valid identification from a key fob 105, a valid facial image, a valid touch pattern, a valid behavioral pattern and a valid voice command. Step 206 comprises, triggering an alert notification upon exceeding the predetermined number of failed authentication attempts, i.e. generating at least one visual alert, generating at least one auditory alert and generating at least one remote alert.

Every access attempt, including failed attempts, are logged with timestamps, location, and unlocking method, allowing for forensic analysis in case of theft or security breaches. The unlocking method may be a forced opening of a door, forced door handle, tampering of the door lock, attempt to hack access control through a hacked password from a mobile phone etc.

Vehicle owners can monitor and manage security settings remotely via a mobile app, receiving alerts even when they are away from the vehicle and taking preventive actions, such as remotely locking the vehicle.

The system 100 can be easily adapted to role-based authentication. This can be done while storing the user settings, enabling fleet owners to control who can access which vehicle and when, reducing misuse and unauthorized access in shared vehicle environments.

The claimed disclosure has the following technical advantages.

Unlike conventional systems that rely on a single alert mechanism such as an alarm, this disclosure provides visual, auditory, and remote notifications, ensuring that security alerts reach the owner through multiple redundant channels.

The system's real-time processing of biometric and behavioral data allows for instant user authentication and immediate threat detection, reducing unauthorized access risks.

The system supports various authentication methods, e.g., fingerprint, facial recognition, voice recognition, mobile device pairing, making it adaptable to different vehicle models and security needs.

By incorporating a combination of biometric verification, behavioral authentication, identification through mobile phone 104, a key fob 105, the system minimizes false alerts caused by accidental or unauthorized key fob 105 use, reducing unnecessary disturbances for users.

The system implements encryption and secure communication protocols to prevent hacking, data interception, or unauthorized access to stored biometric profiles and authentication data.

The system allows for layered security, requiring users to authenticate through multiple methods, e.g. biometrics, PIN key for mobile, mobile phone proximity etc. making it significantly harder for unauthorized users to bypass.

Vehicle owners can monitor and manage security settings remotely via a mobile app, receiving alerts even when they are away from the vehicle and taking preventive actions, such as remotely locking the vehicle.

The disclosure can seamlessly integrate with smart home security systems, allowing automatic triggers, such as turning on home surveillance cameras or locking doors based on vehicle security status.

The system 100 can dynamically adjust its security response based on the severity of the authentication failure, e.g., a single failed attempt may trigger a notification, while multiple failed attempts may activate an alarm and remote alert escalation.

The system 100 supports role-based authentication, enabling fleet owners to control who can access which vehicle and when, reducing misuse and unauthorized access in shared vehicle environments.

Every authentication attempt, including failed attempts, is logged with timestamps, location, and unlocking method, allowing for forensic analysis in case of theft or security breaches.

The system 100 can be designed to optimize power consumption, using low-power biometric sensors and efficient processing algorithms, ensuring it does not drain the vehicle's battery excessively.

### List of Reference numerals

- 100: System for generating alert notifications
- 102: Access control device
- 103: User data
- 104: Mobile phone
- 105: Key fob
- 106: Processor
- 108: Memory
- 110: Communication unit
- 112: Voice authentication unit
- 114: Interfaces
- 115: Touch sensor
- 116: Pre-stored user data
- 117: Finger print sensor
- 118: Camera
- 120: Instrumentation cluster

## Claims

1. A method (200) for generating alert notifications, the method (200) comprising:
receiving (202) user data (103), from one or more user identification means;
extracting (203) unique features from the user data (103);
comparing (204) one or more unique features with a pre-stored user data (116);
determining (205) if the comparison fails, and upon failure, prompting the user to attempt re-authentication up to a predetermined number of times; and
triggering (206) an alert notification upon exceeding the predetermined number of failed authentication attempts, the alert notification comprising at least one of a visual alert, an auditory alert, and a remote alert.

2. The method (200) as claimed in claim 1, wherein,
generating the visual alert comprises activating at least one of a dashboard indicator and a flashing lamp and
generating the auditory warnings comprises activating at least one of a horn and a siren,
generating the remote alert comprises generating at least one of:
a notification to be sent to the communication device (104);
an SMS to be sent to the communication device (104);
an Email to be sent to a registered Email account of the owner; and
a notification sent to the owner's account in a cloud-based server.

3. The method (200) as claimed in claim 1, wherein
generating remote alerts comprises generating remote alerts containing at least one of: details of time of failed access, location of failed access and method of a failed access, and
generating the visual alert comprises activating at least one of a dashboard indicator and a flashing lamp.

4. The method (200) as claimed in claim 1, wherein the user data comprises at least one of user identification method; a fingerprint data, a facial image, an identification from a communication device (104), an identification from a key fob (105), presence of the paired communication device (104) in the proximity, a touch pattern, a behavioral pattern, and a voice command.

5. The method (200) as claimed in claim 1, wherein the unique features comprises at least one of a fingerprint pattern, facial features, a password from the communication device (104), a password from the key fob (105), an identification of the paired communication device (104) in the proximity, a touch pattern, a behavioral pattern, and a voice pattern.

6. The method (200) as claimed in claim 1, wherein the pre-stored user data (116) comprising at least one of a valid fingerprint data, a valid facial image, a valid identification of a communication device (104), a valid identification of a key fob (105), a valid identification of the paired communication device (104) in the proximity, a valid touch pattern, a valid behavioral pattern, and a valid voice command.

7. An access control device (102) to generate alert notifications, the access control device (102) comprising:
a processor (106);
a memory (108) couple to the processor (106), wherein the memory is configured to store a pre-stored user data (116);
wherein the processor (106) comprises,
a user data acquisition module (101) configured to receive user data (103);
a feature extraction module (102) configured to extract unique features from the user data (103);
a comparison module (110) configured to compare one or more extracted unique features with the pre-stored user data (116);
an authentication control module (112) configured to determine if the comparison fails, and upon failure, prompt the user to attempt re-authentication up to a predetermined number of times; and
an alert module (114) configured to trigger an alert notification upon exceeding the predetermined number of failed authentication attempts, wherein the alert notification comprising at least one of a visual alert, an auditory alert, and a remote alert.

8. The access control device (102) as claimed in claim 7, wherein,
the visual alert comprises at least one of a dashboard indicator and a flashing lamp and
auditory warnings comprises at least one of an audio output on a horn and an audio output on a siren.

9. The access control device (102) as claimed in claim 7, wherein the remote alerts comprise at least one of:
a notification to be sent to the communication device (104);
an SMS to be sent to the communication device (104);
an Email to be sent to a registered Email account of the owner; and
a notification sent to the owner's account in a cloud-based server,
wherein the remote alerts comprise details of time of failed access, location of failed access and method of failed access.

10. The access control device (102) as claimed in claim 7 is an instrument cluster (120) or is connectable to an instrument cluster (120).

11. The access control device (102) as claimed in claim 7 wherein a valid behavioral pattern of access comprises at least a data regarding how the vehicle door handle was touched, how the vehicle door handle was pulled, how the vehicle door handle was pressed, how the instrumentation cluster (120) was touched, how the finger was placed on the finger print sensor (117).

12. The access control device (102) as claimed in claim 7 comprising a voice authentication unit (118) to authenticate the voice command.

13. The method (200) as claimed in claim 7, wherein the user data comprises at least one of user identification method; a fingerprint data, a facial image, an identification from a communication device (104), an identification from a key fob (105), presence of the paired communication device (104) in the proximity, a touch pattern, a behavioral pattern, and a voice command.

14. The method (200) as claimed in claim 7, wherein the unique features comprises at least one of a fingerprint pattern, facial features, a password from the communication device (104), a password from the key fob (105), an identification of the paired communication device (104) in the proximity, a touch pattern, a behavioral pattern, and a voice pattern.

15. The method (200) as claimed in claim 7, wherein the pre-stored user data (116) comprising at least one of a valid fingerprint data, a valid facial image, a valid identification of a communication device (104), a valid identification of a key fob (105), a valid identification of the paired communication device (104) in the proximity, a valid touch pattern, a valid behavioral pattern, and a valid voice command.
